# EUROPEAN PATENT SPECIFICATION

(11) **EP 3 256 319 B1**
(45) Date of publication and mention of the grant of the patent: **27.03.2019**
(21) Application number: 16819079.1
(22) Date of filing: 21.12.2016
(51) Int. Cl.: B32B 27/08, B32B 27/30, B32B 27/32

(54) **PRESTRETCHED BALEWRAP**
VORGESPANNTE BALLENHÜLLE
PRESSE-ENRUBANNEUSE PRE-ETIREE

(30) Priority: 22.12.2015 EP 15201986
(43) Date of publication of application: 20.12.2017
(73) Proprietor: Trioplast AB, 333 00 Smålandsstenar (SE)
(72) Inventor: MATTSSON, Robert, 471 95 Skärhamn (SE)
(74) Representative: AWA Sweden AB
(86) International application number: PCT/EP2016/082078
(87) International publication number: WO 2017/108891

(56) References cited:
- EP-A1- 2 883 683
- WO-A1-2011/076694
- WO-A1-2015/077711
- US-A- 5 569 693
- US-A1- 2009 269 566

## Description

### FIELD OF THE INVENTION

The present invention relates to a prestretched agricultural stretch wrap film suitable for baling applications, such as for example packaging grass, maize, sugar beet pulp, malt, straw, household refuse, and the like.

### BACKGROUND OF THE INVENTION

Plastic film is used for many different purposes. For example, plastic stretch film is frequently used in different fields of application, in particular for wrapping various products, for example wrapping goods for shipping or storing, or for wrapping agricultural bulk products, such as grass, straw, various crops, etc. In agricultural applications, stretch film may for instance be used as fodder protection and silage film. For the production of silage, anaerobic conditions are desirable, and so the film should provide a barrier against moisture and oxygen.

In silage production, a baler is first used to form compact bales of the agricultural bulk product, which are wrapped tightly with net, twine or film to retain the shape of the bale. Once the net, twine or film is lying around the bale, the formed bale is ejected from the baling chamber.

The bale is then wrapped with an agricultural stretch wrap film using a bale wrapper. In the bale wrapper the agricultural stretch wrap film is stretched, typically in the range of 50-75% and a number of layers of the stretched agricultural stretch wrap film are wrapped around the bale to form an airtight and waterproof bale suitable for silage production.

Conventionally, agricultural stretch wrap films are made primarily of one or more polymers, in particular polyolefins (e.g. polyethylene). The polyolefin is extruded and blown to form a tubular film. Usually various additives such as pigments, tackifiers, UV stabilizers, etc, are added to the film composition in order to meet the requirements of the intended use. Stretch film for silage productions requires e.g. a good UV stabilization of the film material, high cling, and high mechanical performance in terms of good resistance to puncturing and tearing.

Agricultural stretch wrap films are often prestretched in the machine direction (i.e. in the longitudinal direction) during manufacturing. Prestretching has been shown to provide films with improved mechanical properties and lower or maintained oxygen permeability compared to unstretched films of the same film thickness. The prestretched film is then (further) stretched when used for wrapping. Prestretching is advantageous because thinner films can be used, which means e.g. less film material per bale, more (metres of) film per roll at the same roll weight, and less frequent roll change.

It is thus understood that it is the higher the prestretching the greater the savings. However, as identified in the International patent application WO2009040129A2 there are limitations in the degree of stretching which can be applied to the currently known prestretched agricultural stretch wrap films. When a film is stretched in the bale wrapper, typically by approximately 50 to 75%, by means of the stretch unit provided on the bale wrapper it has been found that the prestretched agricultural stretch wrap films which are prestretched to a degree above 70% tear off more easily when stretched at this standard stretch percentage of approximately 50 to 75%. Such tearing results in time loss for the user, badly wrapped bales and an increase in the use of film. To remedy this problem WO2009040129A2 suggests to use films prestretched to a degree below 70%. This low degree of prestretching obviously limits the potential advantages of higher prestretching, i.e. thinner films, less film material per bale, more (metres of) film per roll at the same roll weight, and less frequent roll change.

It is an object of the present invention to provide a prestretched agricultural stretch wrap film which can be used as an alternative to the prior art agricultural stretch wrap films which allow a higher degree of prestretching (typically higher than 70%) without the abovementioned drawbacks of the known prestretched agricultural stretch wrap films.

### SUMMARY OF THE INVENTION

It is an object of the present invention to at least partly overcome the problems in the prior art, and to provide a stretch film with properties acceptable for use in agriculture and/or industry, which can be produced at a relatively low cost.

According to a first aspect of the invention, this and other objects are achieved by a prestretched polyethylene film having a longitudinal degree of pre-stretching above 70% and a remaining longitudinal elongation capability of at least 300% as determined according to ASTM D882, wherein the thickness of the film is in the range of 10 - 30 µm and wherein the film comprises at least 25% by weight of a linear low density polyethylene (LLDPE) substantially free from long chain branching (LCB) and having a density below 915 kg/m³.

According to preferred embodiments, there is provided a prestretched polyethylene film having a longitudinal degree of pre-stretching above 70% and a remaining longitudinal elongation capability of at least 300% as determined according to ASTM D882, wherein said film is a coextruded blown film comprising at least one core layer arranged between two exterior layers, wherein the thickness of the film is in the range of 10-30 µm, and wherein the film comprises at least 25% by weight of a linear low density polyethylene (LLDPE) substantially free from long chain branching (LCB) produced using a Ziegler Natta catalyst and hexene, heptene or octene as comonomer and having a density of between 910 and 915 kg/m³.

Prestretching of polyethylene films has been shown to provide films with improved mechanical properties and lower or maintained oxygen permeability compared to unstretched films of the same film thickness. Accordingly, thinner films can be used, which means e.g. less film material per bale, more (metres of) film per roll at the same roll weight, and less frequent roll change. An additional advantage of the stretch film according to the present invention is lower raw material costs.

The inventive film comprises at least 25% by weight of linear low density polyethylene (LLDPE) substantially free from long chain branching (LCB) and having a density below 915 kg/m³. Using this particular type of linear low density polyethylene has been found to allow higher degrees of prestretching with retained high elongation capability, thus alleviating the prior art tearing problems associated with films prestretched to a degree above 70%. The inventive films have also been found to exhibit similar or better mechanical performance for use in agricultural bale wrapping applications, as compared to the corresponding prior art films comprising higher density LLDPE instead of the LLDPE substantially free from long chain branching (LCB) and having a density below 915 kg/m³. The portion of the prestretched polyethylene film not made up of the linear low density polyethylene (LLDPE) substantially free from long chain branching (LCB) and having a density below 915 kg/m³ may comprise other types of LLDPE, LDPE, and other polyolefins and additives commonly used in the manufacture of prestretched polyethylene films.

According to some embodiments, prestretched polyethylene film comprises at least 35%, preferably in the range of 35-95%, by weight of said linear low density polyethylene (LLDPE) substantially free from long chain branching (LCB).

According to some embodiments, the prestretched polyethylene film comprises a mixture of LLDPE substantially free from long chain branching (LCB) and having a density below 915 kg/m³ and higher density LLDPE, wherein the LLDPE mixture has a density below 916 kg/m³, preferably below 915 kg/m³, and more preferably below 914 kg/m³.

Prestretched polyethylene films are commonly produced from linear low density polyethylene (LLDPE). LLDPE is used in stretch films due to its favorable characteristics in respect of e.g. tensile strength, elongation at break and puncture resistance. The LLDPE used in stretch wrap polyethylene films, particularly films for agricultural applications, can be LLDPE prepared using a Ziegler Natta or Philips type catalyst and a comonomer, such as octene, to provide a suitable degree of short chain branching. This type of LLDPE typically has a density of about 918 kg/m³. The LLDPE may also be prepared using a Metallocene catalyst and a comonomer, such as octene. Metallocene catalysts may lead to the formation of a small degree of long chain branching (LCB) in addition to the short chain branching.

The LLDPE used in the inventive prestretched polyethylene films is preferably LLDPE prepared using a Ziegler Natta type catalyst and a comonomer, such as hexene, heptene or octene, or a mixture thereof, to provide a suitable degree of short chain branching, and no or substantially no long chain branching. The LLDPE used in the inventive prestretched polyethylene films has a low density compared to LLDPE typically used in prior art stretch wrap polyethylene films, particularly films for agricultural applications.

According to some embodiments, the linear low density polyethylene (LLDPE) substantially free from long chain branching (LCB) is an LLDPE is produced using a Ziegler Natta catalyst and hexene, heptene or octene or a mixture thereof as comonomer. In preferred embodiments the comonomer is hexene or octene. In more preferred embodiments the comonomer is octene. Preferably, the linear low density polyethylene (LLDPE) substantially free from long chain branching (LCB) comprises from about 85 wt% to about 98 wt% of recurring units of ethylene and from about 2 wt % to about 15 wt % of recurring units of hexene, heptene or octene.

According to some embodiments, the linear low density polyethylene (LLDPE) substantially free from long chain branching (LCB) has a density of between 910 and 915 kg/m³, preferably a density of between 911 and 913 kg/m³, preferably a density of about 912 kg/m³.

According to some embodiments, the linear low density polyethylene (LLDPE) substantially free from long chain branching (LCB) has a melt flow index (MI) in the range of 0.7-1.3 g/10min, preferably a melt flow index in the range of 0.9-1.1 g/10min, preferably a melt flow index of about 1 g/10min, as determined according to ASTM D1238 at 190 °C with a 2.16 kg weight.

The expression prestretched polyethylene film means that the polyethylene film is stretched in the longitudinal direction during the film production process before being wound onto rolls. Stretching is typically performed in a prestretch unit of the production line and involves passing the film between two or more stretching rollers rotating at different speeds. The prestretching may preferably be performed directly after the extrusion or film blowing steps, while the film is still hot. The degree of prestretching is intended to mean the difference in speed, in percent, between the stretching rollers in the prestretch unit. The difference in speed corresponds to the elongation of the prestretched film between the stretching rollers in the prestretch unit.

The prestretched polyethylene film has a longitudinal degree of prestretching above 70%. The longitudinal degree of prestretching of the prestretched polyethylene film may for example be between 70% and 150%, such as between 70% and 125%, between or 70% and 100%.

According to some preferred embodiments, the prestretched polyethylene film has a longitudinal degree of prestretching between 70% and 85%, preferably between 71% and 79%, preferably between 73% and 77%, preferably about 75%.

The term elongation capability as used herein means the elongation percentage at break, as measured in accordance with the ASTM D882 standard, wherein a strip of film with a width of 20 mm, clamped between two clamps at a distance of 50 mm from each other is stretched at a rate of 500 mm/min until the film breaks. At least five strips of the film must be measured, and the elongation capability corresponds to the mean value of the measurements.

According to some embodiments, the prestretched polyethylene film has a remaining longitudinal elongation capability of at least 320%, preferably at least 340%, as determined according to ASTM D882.

The stress required in order to stretch the prestretched film by 70% in the longitudinal direction can be read from the tensile strength graph obtained when measuring the elongation percentage at break in accordance with the ASTM D882 standard as described above. At least five strips of the film must be measured, and the stress at 70% elongation corresponds to the mean value of the measurements.

According to some embodiments, the stress required in order to stretch the prestretched polyethylene film by 70% in the longitudinal direction is less than 19 MPa, preferably less than 18 MPa, as determined according to ASTM D882.

According to some embodiments, the thickness of the film is in the range of 13-25 µm, preferably in the range of 15-20 µm.

Typically, the stretch film according to embodiments of the present invention allows an anaerobic environment to be formed and thereby nutrients and energy content to be preserved during storage. A silage film should form a barrier for oxygen gas. Typically, a silage film has an oxygen permeability of less than 10 000 cm³/m²/24 h, such as within the range of from 1000 to 10 000 cm³/m²/24 h measured according to the standard ASTM D-1434.

By the term "UV stabilization" is meant protection of a material from the long-term degradation effects from light, most frequently ultraviolet radiation (UV).

By the term "mechanical performance" is herein mainly meant the mechanical strength of the material, measured in terms of at least one of tensile strength, tear strength and puncture resistance. Tensile strength, measured as force per unit area, is defined as the maximum stress that a material can withstand while being stretched or pulled before failing or breaking. Tear strength, typically measured as force per unit length, is defined as the resistance of a material to the growth of e.g. a cut when under tension. Elongation at break is defined as the ultimate elongation (given as percentage of the initial length) of a material before it breaks under tension. Puncture resistance, typically measured as mass per unit length, is defined as the relative ability of a material to withstand a falling dart without breaking.

According to an embodiment, the prestretched polyethylene film is a coextruded multi-layer blown film comprising at least two layers. Preferably, the prestretched polyethylene film is a multi-layer film comprising at least three layers: at least one core layer arranged between two exterior layers.

According to an embodiment, at least one layer comprises in the range of 40-99% by weight of the linear low density polyethylene (LLDPE) substantially free from long chain branching (LCB). According to an embodiment, the at least one core layer comprises in the range of 40-99% by weight of the linear low density polyethylene (LLDPE) substantially free from long chain branching (LCB).

According to an embodiment, at least one of the two exterior layers comprises a soft polymer. A soft polymer may provide a relatively soft surface to the at least one of the two exterior layers which may increase friction, and reduce slip in a direction substantially parallel to the film surface. A soft polymer may be advantageous when the prestretched polyethylene film is e.g. wrapped with an overlap, such that the film may adhere, or cling, to itself. By the term "cling" is meant the ability of a material to adhere to itself or an adjacent object. The adjacent object may be a layer of the same or a different film.

According to an embodiment, the prestretched polyethylene film may comprise a tackifier. By the term "tackifier" is herein meant an agent that provides cling to a film. Such an agent may be added to a layer of the prestretched polyethylene filmin order to increase the cling of the layer. For instance, a tackifier may be a soft polymer, or a migrating tackifier. A tackifier thus serves to increase the cling of the prestretched polyethylene film, in particular, of the exterior layers.

According to an embodiment, the tackifier is a migrating tackifier. By the term "migrating tackifier" is herein meant a tackifier which is soluble in the film material, e.g. in polyethylene. If a migrating tackifier is added to a film (or film layer) in an amount exceeding the solubility level of the film (or film layer), the excess can migrate within the film material to the film surface (including also migrating from a first layer to and through a another layer, when the first layer has been saturated with the migrating tackifier). A migrating tackifier may thus provide an adhesive surface which increases the friction in a direction substantially perpendicular to the film surface. A migrating tackifier may be advantageous when the prestretched polyethylene film is e.g. wrapped, such that an exterior layer of a first portion of the prestretched polyethylene film adhere, or cling, to an exterior layer of a second portion of the same, or a different, prestretched polyethylene film.

According to an embodiment, the migrating tackifier is present at a content of from 1 to 15% by weight based on the total weight of the at least one core layer. The content of migrating tackifier added to the at least one core layer typically exceeds the content of migrating tackifier required to saturate the at least one core layer with regard to the migrating tackifier. The content required to saturate the at least one core layer may depend on the content of polyethylene and other polyolefins, in which the migrating tackifier is soluble, in the at least one core layer.

According to an embodiment, the prestretched polyethylene film further comprises an agent being selected from an additional pigment and a UV stabilizer. An additional pigment may be advantageous for varying the color and/or the opacity of the prestretched polyethylene film further. A UV stabilizer may be advantageous for preventing chain reactions caused by e.g. radicals within the polyolefin layer(s) of the prestretched polyethylene film e.g. during storage outdoors of the prestretched polyethylene film.

According to an embodiment, the multi-layer prestretched polyethylene film comprises from 2 to 5 core layers. However, the prestretched polyethylene film may comprise from 1 to up to 20 core layers.

According to an embodiment, the at least one core layer has a thickness in the range of from 0.5 to 28 µm. In embodiments where the film comprises multiple core layers, each core layer may have a thickness within the range of from 0.5 µm to 28 µm. Typically, the thickness of the total number of core layers is less than 28 µm. The prestretched polyethylene film (i.e., including all core layers and the exterior layers) may have a total thickness within the range of from 10 to 30 µm.

The thickness values given throughout this specification refer to the thickness of the prestretched polyethylene film or a specific layer of the prestretched polyethylene film after the stretch film is stretched during its production (so-called prestretching).

According to an embodiment, the prestretched polyethylene film has an oxygen permeability of less than 10 000 cm³/m²/24 h. In particular, if the prestretched polyethylene film serves as an agricultural film, e.g. a silage film, good barrier properties to oxygen and other gases are important. Typically, a silage film has an oxygen permeability of less than 10 000 cm³/m²/24 h, such as within the range of from 1000 to 10 000 cm³/m²/24 h measured according to the standard ASTM D-1434.

According to an embodiment, the prestretched polyethylene film is an agricultural bale wrap film or silage film.

In another aspect, the invention provides the use of a prestretched polyethylene film as described herein. For example, the prestretched polyethylene film may be used as an agricultural film, such as a balewrap film or a silage film. In other embodiments, the stretch film may be used as a pallet wrapping film. In yet other embodiments, the film may be used as a waste wrap film.

It is noted that the invention relates to all possible combinations of features recited in the claims.

### DETAILED DESCRIPTION

Preferred embodiments of the invention will now be described in more detail. The invention may, however, be embodied in many different forms and should not be construed as limited to the embodiments set forth herein; rather, these embodiments are provided for thoroughness and completeness, and fully convey the scope of the invention to the skilled person.

The inventive film comprises at least 25% by weight of linear low density polyethylene (LLDPE) substantially free from long chain branching (LCB) and having a density below 915 kg/m³.

The film may be a single layer film or a film comprising more than one layer. A film comprising more than one layer may be called a multi-layer film.

Preferably, the prestretched polyethylene film according to the present invention is a multi-layer film comprising at least three layers: at least one core layer arranged between two exterior layers.

The prestretched polyethylene film may comprise from 1 to 5 core layers. In embodiments, where the prestretched polyethylene film comprises more than one core layer, the core layers may have the same composition. Alternatively, the more than one core layers may differ in composition compared to each other. In a preferred embodiment, the film consists of three layers; one core layer arranged between two exterior layers.

The two exterior layers may have the same or similar composition. Alternatively, the two exterior layers may differ in composition compared to each other.

The stretch film may be either blown or cast. A blown stretch film has been melted and thereafter air-cooled when blown out. A cast stretch film has been cooled over cooling rollers.

The at least one core layer may form from 50% to 90%, such as from 70% to 80%, by weight of total weight of the prestretched polyethylene film. In a prestretched polyethylene film comprising one core layer, the one core layer may form from 50% to 90%, such as from 70% to 80% by weight of the total weight of the prestretched polyethylene film. In a prestretched polyethylene film comprising more than one core layer, the total number of core layers may form from 50% to 90%, such as from 70% to 80%, by weight of total weight of the prestretched polyethylene film.

The two exterior layers may together form from 10% to 50%, such as from 20% to 30% by weight of the total weight of the prestretched polyethylene film. Typically, the exterior layers each forms about 10% by weight of total weight of the prestretched polyethylene film.

The prestretched polyethylene film may have a total film thickness within the range of from 10 µm to 30 µm, such as from 15 µm to 25 µm, such as from 12 µm to 20 µm, for example about 19 µm. The thickness of the two exterior layers may be within the range of from 0.5 µm to 10 µm, such as from 1 µm to 5 µm , for example from 2 µm to 3 µm. The thickness of the at least one core layer may be within the range of from 5 to 28 µm, such as from 5 µm to 25 µm, for example from 10 µm to 20 µm.

In an embodiment, the prestretched polyethylene film comprises one core layer. The thickness of the one core layer may be within the range of from 5 to 28 µm, such as from 10 µm to 25 µm, for example from 10 µm to 20 µm. Alternatively, the prestretched polyethylene film may comprise more than one core layer. The thickness of the total number of core layers may be within the range of from 5 to 28 µm, such as from 5 µm to 25 µm, for example from 10 µm to 20 µm.

In an example, a prestretched polyethylene film comprising one core layer and two exterior layers sandwiching the core layer may have a total film thickness of 19 µm. The core layer may have a thickness of 14 µm and each of the exterior layers has a thickness of 2.5 µm.

The prestretched polyethylene film according to the present invention comprises at least 25% by weight of linear low density polyethylene (LLDPE) substantially free from long chain branching (LCB) and having a density below 915 kg/m³.

The portion of the prestretched polyethylene film not made up of the linear low density polyethylene (LLDPE) substantially free from long chain branching (LCB) and having a density below 915 kg/m³ may comprise other types of LLDPE, LDPE, and other polyolefins and additives commonly used in the manufacture of prestretched polyethylene films. Examples of additional polyolefin components include linear low density polyethylene (LLDPE) having higher density, low density polyethylene (LDPE), and very low density polyethylene (VLDPE), as well as polypropylenes and polybutylenes. Preferably, the portion of the prestretched polyethylene film not made up of the linear low density polyethylene (LLDPE) substantially free from long chain branching (LCB) and having a density below 915 kg/m³ is substantially made up of higher density LLDPE.

In a preferred embodiment, the core layer comprises a mixture of LLDPE substantially free from long chain branching (LCB) and having a density below 915 kg/m³ and higher density LLDPE, wherein the LLDPE mixture has a density below 916 kg/m³, preferably below 915 kg/m³, and more preferably below 914 kg/m³.

The core layer and the exterior layers may have different composition. At least one of the exterior layers may comprise a polymer such as ethylene vinyl acetate copolymer (EVA) or ethylmethacrylate copolymer (EMA).

The at least one core layer may preferably comprise from 25 to 95%, preferably from 30 to 95% or from 40 to 95% by weight of the linear low density polyethylene (LLDPE) substantially free from long chain branching (LCB) and having a density below 915 kg/m³, based on the total weight of the at least one core layer. For instance, the at least one core layer comprise the LLDPE substantially free from long chain branching (LCB) and having a density below 915 kg/m³, at a content of from 40 to 90% by weight based on the total weight of the core layer, such as from 40 to 70%, 40 to 60%, or 45 to 55% by weight based on the total weight of the core layer.

The prestretched polyethylene film according to embodiments of the invention comprises two exterior layers. The exterior layers sandwich the at least one core layer, i.e. the core layer is arranged between two exterior layers. By "exterior layer" is meant a layer forming at least part of a surface of the film.

The exterior layers may be of identical or similar composition, or may differ in composition. Typically however an exterior layer comprises a thermoplastic polymer, such as a polyolefin, as a base material. Examples of suitable base materials for an exterior layer include polyethylene, especially LLDPE or VLDPE, and ethylene-vinyl acetate co-polymer.

As described herein, the prestretched polyethylene film according to the invention comprises at least two exterior layers and at least one core layer. Typically, at least one of the two exterior layers has a certain cling. In some embodiments, one exterior layer may have a higher degree of cling than an exterior layer arranged on the opposite side of the core layer.

In embodiments of the invention, the prestretched polyethylene film may comprise a tackifier. Typically at least one of the exterior layers may comprise a tackifier.

Conventional tackifiers, known to the person skilled in the art, may be added to the prestretched polyethylene film. Examples of conventional tackifiers include soft polymers and migrating tackifiers. A soft polymer may provide a relatively soft surface which may increase friction, and reduce slip in a direction substantially parallel to the film surface. A migrating tackifier, on the other hand, may provide an adhesive surface that increases the friction in a direction substantially perpendicular to the film surface.

Examples of suitable soft polymers include ethylene vinyl acetate co-polymer (EVA), ethyl methacrylate co-polymer (EMA) and very low density polyethylene (VLDPE). Hence, in embodiments where an exterior layer comprises EVA, EMA, or VLDPE as a base material, this may provide sufficient cling, such that it may not be necessary to add a further tackifier. Optionally however, a layer comprising a soft polymer may also comprise a migrating tackifier.

In an example, the cling of at least one of the exterior layers may be achieved by the use of a soft polymer, or a combination of soft polymers, in at least one of the two exterior layers.

VLDPE may be added to at least one exterior layer in order to provide cling to the at least one exterior layer. In an embodiment, the content of VLDPE may be up to 100% by weight of the at least one exterior layer. For instance, one of the two exterior layers may consist of 100% VLDPE.

The soft polymer EVA may be used in combination with the migrating tackifier PIB in order to provide cling to at least one exterior layer. For example, PIB may be added to the core layer at a content that is sufficient to allow migration to the exterior surface of at least one of the exterior layers upon saturation of the core layer and the at least one exterior surface. EVA may be comprised in the at least one exterior layer. An advantage of combining a soft polymer, e.g. EVA, and a migrating tackifier, e.g. PIB, in at least one exterior layer is that the cling may be improved due to increased resistance of the exterior layer to forces both substantially parallel as well as substantially perpendicular to the exterior surface of the exterior layer.

Suitable contents of at least one of a migrating tackifier, a soft polymer and a combination thereof, in the at least one core layer and/or in any or both of the two exterior layers of the prestretched polyethylene film are known to the person skilled in the art.

A migrating tackifier may migrate within a material, including within a single layer, as well as from one layer to an adjacent layer. In embodiments of the present invention, a migrating tackifier may migrate from any one of the layers of the prestretched polyethylene film (e.g. the core layer) to the film surface of the prestretched polyethylene film (typically the surface of an exterior layer). An example of a migrating tackifier is polyisobutylene (PIB).

A migrating tackifier may be added to one or more layers of the prestretched polyethylene film, typically including the thickest layer(s) of the prestretched polyethylene film. When the prestretched polyethylene film comprises more than one core layer, the migrating tackifier may be added to one or more, including all, of the core layers. Alternatively, the migrating tackifier may be added to the thickest of the core layers. Upon saturation of the thickest layer(s) with regard to the migrating tackifier, the excess of migrating tackifier may migrate into adjacent layer(s). For example, the migrating tackifier may be initially added to the core layer, and upon saturation of the core layer, the excess of migrating tackifier may migrate into the two exterior layers sandwiching the core layer. Typically, also the exterior layers are saturated with the migrating tackifier, thereby allowing the migrating tackifier to migrate through the exterior layers and accumulate at the exterior surfaces of the exterior layers providing cling.

The cling of at least one of the exterior layers may be achieved by addition of a migrating tackifier to the at least one core layer. The migrating tackifier will initially be comprised in the core layer, and over time migrate to the exterior layers. The content of migrating tackifier added to the at least one core layer may exceed the content of migrating tackifier required to saturate the at least one core layer with regard to the migrating tackifier.

The migrating tackifier may be soluble in polyethylene and other polyolefins. Thus, the content required to saturate the at least one core layer may depend on the content of polyethylene and other polyolefins, in which the migrating tackifier is soluble, in the at least one core layer.

The at least one core layer may comprise migrating tackifier, e.g. in the form of polyisobutylene (PIB), at a content of from 0 to 15% by weight, e.g. from 1 to 15% by weight, such as from 3 to 7% by weight, based on the total weight of the at least one core layer. In an embodiment, the at least one core layer comprises approximately 5% by weight of PIB.

More specifically, in an embodiment, the prestretched polyethylene film comprises only one core layer. A migrating tackifier, e.g. in the form of PIB, may be present in the core layer at a content of from 0 to 15% by weight, e.g. from 1 to 15% by weight, such as from 3 to 7% by weight, based on the total weight of the one core layer. The one core layer may comprise approximately 5% by weight of PIB.

In another embodiment, the prestretched polyethylene film comprises more than one core layer, such as two or more core layers arranged adjacent each other. A migrating tackifier, e.g. PIB, may be present in one or more of the core layers at a content of from 0 to 15% by weight, e.g. from 1 to 15% by weight, such as from 3 to 7% by weight based on the total weight of the total number of core layers. The core layers may together comprise approximately 5% by weight of PIB. It is envisaged that when the prestretched polyethylene film comprises multiple core layers, a tackifier could initially be contained in only one of the core layers, or in several or all of the core layers. Typically however, due to the nature and purpose of a migrating tackifier, with time all of the layers may contain the tackifier, even if the tackifier was added only to one of the core layers during manufacture of the multi-layer film.

By the addition of an additional pigment to the at least one core layer, the color and the opacity of the prestretched polyethylene film may be further varied. The at least one core layer may comprise an additional pigment in a range of from 0 to 10% by weight, e.g. from 1 to 10% by weight, based on the total weight of the at least one core layer. A prestretched polyethylene film for silage, typically comprises from 2 to 5% by weight of an additional pigment in the form of titanium dioxide (TiO₂).

White pigments provide opacity by scattering visible light. An example of a suitable white additional pigment is titanium dioxide (TiO₂). Colored pigments provide opacity by absorbing light. An example of a suitable colored additional pigment is carbon black (CB).

Alternatively, an additional pigment may be absent in the prestretched polyethylene film. In such an embodiment, the prestretched polyethylene film can be relatively transparent.

In some applications, a certain level of opacity may be advantageous with regard to protection against noxious animals, such as vermin, birds, and insects, which may harm either the prestretched polyethylene film or the material being stored inside an arrangement of the prestretched polyethylene film, e.g. a bale of silage. As an example, a certain level of opacity of the prestretched polyethylene film may hinder a bird from observing the material of the bale of silage, thereby hinder the prestretched polyethylene film from being punctured by the beak or claws of the bird. The transparency of the prestretched polyethylene film is usually within the range of from 63 to 73%, such as approximately 70%, measured by the standard ASTM D-1003.

The prestretched polyethylene film according to embodiments of the invention may comprise a UV stabilizer, contained in at least one layer of the multi-layer film. Conventional UV stabilizer, known to the person skilled in the art, may be added for example to the at least one core layer. A UV stabilizer typically traps free radicals generated in the polyolefin material by UV irradiation, and may thus prevent chain reactions within the polyolefin layer(s) of the prestretched polyethylene film, which would otherwise result in degradation of the polyolefin material.

In embodiments of the invention, all layers of the prestretched polyethylene film may comprise a UV stabilizer. A good UV stabilization of the film material is desirable in order to avoid that the prestretched polyethylene film degrades during storage time outdoors which typically may be up to a year.

Examples of suitable UV stabilizers are Chimassorb 944 (BASF, Italy), Tinuvin 622 (BASF, Germany), and Chimassorb 2020 (BASF, Italy). An additional pigment, such as TiO₂ or CB, may also function as a UV stabilizer. The at least one core layer may comprise UV stabilizator in a range of from 0 to 0.6% by weight based on the total weight of the at least one core layer.

A multilayer prestretched polyethylene film according to embodiments of the invention may be produced by a manufacturing process involving the following steps:
a) providing a first extrudible composition comprising at least 25% by weight of linear low density polyethylene (LLDPE) substantially free from long chain branching (LCB) and having a density below 915 kg/m3;
b) providing at least one additional extrudible composition comprising at least one polymer;
c) extruding the first composition obtained in step a) to form at least one core layer;
d) extruding the at least one additional extrudible composition to form two exterior layers on opposing sides of the core layer.

According to embodiments, the linear low density polyethylene (LLDPE) substantially free from long chain branching (LCB) is produced using a Ziegler Natta catalyst and hexene, heptene or octene as comonomer and having a density of between 910 and 915 kg/m³.

The first extrudible composition is intended to form a core layer. The first extrudible composition comprising comprising at least 25% by weight of linear low density polyethylene (LLDPE) substantially free from long chain branching (LCB) and having a density below 915 kg/m³ may be mixed with at least one other polyolefin and optionally at least one additive, e.g. selected form the group consisting of: UV stabilizers, additional pigments, and tackifiers.

The at least one additional extrudible composition is typically intended to form one of the exterior layers or both exterior layers. The step of providing at least one additional extrudible composition comprising at least one polymer may imply providing a second extrudible composition comprising at least one polymer. Optionally, also a third extrudible composition comprising at least one polymer may be provided. In particular, in embodiments where the exterior layers have different composition, the second extrudible composition is intended to form one of the exterior layers, and the third extrudible composition is intended to form the other one of the exterior layers.

For example, the second extrudible composition may be provided by mixing a soft polymer with optionally at least one additive selected form the group consisting of: UV stabilizers and tackifiers. The second extrudible composition is typically adapted to provide cling. The third extrudible composition may be provided by mixing a polyolefin, e.g. a polyethylene, with optionally at least one additive selected form the group consisting of: UV stabilizers and tackifiers. The third extrudible composition may be adapted to provide a low friction surface.

Optionally, a single additional extrudible composition may be provided, which may be adapted to provide cling and/or a low friction surface.

The step of extruding the first composition obtained in step a) to form at least one core layer may imply that the first composition is extruded to a single core layer or to multiple core layers. Typically, in the case of multiple core layers, the multiple core layers are extruded simultaneously by coextrusion and adhere to each other due to substantially identical chemical properties.

The step of extruding the at least one additional extrudible composition to form two exterior layers on opposing sides of the core layer may imply extruding the second extrudible composition to form a first exterior layer on a first side of the core layer and extruding the third extrudible composition to form a second exterior layer on a second side of the core layer, wherein the first side of the core layer is arranged opposite to the second side of the core layer.

Alternatively, the single additional extrudible composition is extruded to form two exterior layers on opposing sides of the core layer.

The steps of extruding the first extrudible composition to form at least one core layer and the additional extrudible composition to form two exterior layers, respectively, may be performed separately from each other e.g. by monoextrusion, or simultaneously e.g. by coextrusion. Typically, the prestretched polyethylene film is prepared by co-extrusion, using one extruder per layer simultaneously. Monoextrusion and coextrusion are techniques generally known to the person skilled in the art.

The person skilled in the art realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### EXAMPLES

### Preparatory Example 1 - Prior art balewrap (59% prestretch)

A first extrudible composition was prepared. The first extrudible composition comprised LLDPE (Dowlex 2045S) with a density of 918 kg/m³ at a content of 88.5% by weight, TiO₂ at a content of 6% by weight, a migrating tackifier in the form of PIB (polyisobutylene) at a content of 5% by weight, and a UV stabilizer at a content of 0.5% by weight based on the total weight of the first extrudible composition.

Two additional extrudible compositions, namely a second extrudible composition and a third extrudible composition, were prepared. The second extrudible composition comprised EVA (Exxon Escorene Ultra FL 00218), at a content of 94.5% by weight, a migrating tackifier in the form of PIB at a content of 5% by weight, and a UV stabilizer at a content of 0.5% by weight based on the total weight of the second extrudible composition. The third extrudible composition comprised polyethylene, i.e. a combination of LLDPE and LDPE, at a content of 99.5% by weight, and a UV stabilizer at a content of 0.5% by weight based on the total weight of the third extrudible composition.

The extrudible compositions were each mixed separately using blending devices or mixing devices generally known to a person skilled in the art.

By means of coextrusion, a core layer was formed of the first extrudible composition and two exterior layers sandwiching the core layer were formed of the second extrudible composition and the third extrudible composition, respectively. The coextruded film was blown and subsequently subjected to 59% prestretching. The core layer and the exterior layer together formed a prestretched polyethylene film of a total thickness of 19 µm. The second extrudible composition provided cling to the prestretched polyethylene film. The third extrudible composition provided a low friction surface to the prestretched polyethylene film.

The two exterior layers each formed 10% by weight of the total film. The core layer formed 80% by weight of the total film.

Several tests were performed to analyze the mechanical properties of the prestretched polyethylene film. The results of the tests are summarized in Table 1.

### Preparatory Example 2 - Prior art balewrap (75% prestretch)

A first, second and third extrudible composition were prepared according to Preparatory Example 1.

By means of coextrusion, a core layer was formed of the first extrudible composition and two exterior layers sandwiching the core layer were formed of the second extrudible composition and the third extrudible composition, respectively. The coextruded film was blown and subsequently subjected to 75% prestretching. The core layer and the exterior layer together formed a prestretched polyethylene film of a total thickness of 19 µm. The two exterior layers each formed 10% by weight of the total film. The core layer formed 80% by weight of the total film. Several tests were performed to analyze the mechanical properties of the prestretched polyethylene film. The results of the tests are summarized in Table 1.

### Preparatory Example 3 - Balewrap with metallocene LLDPE (75% prestretch)

A first, second and third extrudible composition were prepared according to Preparatory Example 1 with the exception that the first extrudible composition comprised a LLDPE mixture of a metallocene LLDPE with a density of 916 kg/m³ and a melt flow index (MI₂ measured at 190 °C with a 2.16 kg weight) of 1.0 g/10min at a content of 48% by weight and Dowlex 2045S with a density of 918 kg/m³ at a content of 40.5% by weight based on the total weight of the first extrudible composition.

By means of coextrusion, a core layer was formed of the first extrudible composition and two exterior layers sandwiching the core layer were formed of the second extrudible composition and the third extrudible composition, respectively. The coextruded film was blown and subsequently subjected to 75% prestretching. The core layer and the exterior layer together formed a prestretched polyethylene film of a total thickness of 19 µm. The two exterior layers each formed 10% by weight of the total film. The core layer formed 80% by weight of the total film. Several tests were performed to analyze the mechanical properties of the prestretched polyethylene film. The results of the tests are summarized in Table 1.

### Preparatory Example 4 - Balewrap with metallocene LLDPE (75% prestretch)

A first, second and third extrudible composition were prepared according to Preparatory Example 1 with the exception that the first extrudible composition comprised a LLDPE mixture of a metallocene LLDPE with a density of 915 kg/m³ and a melt flow index (MI₂ measured at 190 °C with a 2.16 kg weight) of 1.0 g/10min at a content of 48% by weight and Dowlex 2045S with a density of 918 kg/m³ at a content of 40.5% by weight based on the total weight of the first extrudible composition.

By means of coextrusion, a core layer was formed of the first extrudible composition and two exterior layers sandwiching the core layer were formed of the second extrudible composition and the third extrudible composition, respectively. The coextruded film was blown and subsequently subjected to 75% prestretching. The core layer and the exterior layer together formed a prestretched polyethylene film of a total thickness of 19 µm. The two exterior layers each formed 10% by weight of the total film. The core layer formed 80% by weight of the total film. Several tests were performed to analyze the mechanical properties of the prestretched polyethylene film. The results of the tests are summarized in Table 1.

### Preparatory Example 5 - Balewrap with high melt flow index (75% prestretch)

A first, second and third extrudible composition were prepared according to Preparatory Example 1 with the exception that the first extrudible composition comprised a LLDPE mixture of a metallocene LLDPE with a density of 918 kg/m³ and a melt flow index (MI₂ measured at 190 °C with a 2.16 kg weight) of 2.3 g/10min at a content of 48% by weight and Dowlex 2045S with a density of 918 kg/m³ at a content of 40.5% by weight based on the total weight of the first extrudible composition.

By means of coextrusion, a core layer was formed of the first extrudible composition and two exterior layers sandwiching the core layer were formed of the second extrudible composition and the third extrudible composition, respectively. The coextruded film was blown and subsequently subjected to 75% prestretching. The core layer and the exterior layer together formed a prestretched polyethylene film of a total thickness of 19 µm. The two exterior layers each formed 10% by weight of the total film. The core layer formed 80% by weight of the total film. Several tests were performed to analyze the mechanical properties of the prestretched polyethylene film. The results of the tests are summarized in Table 1.

### Preparatory Example 6 - Inventive Balewrap with LLDPE substantially free from long chain branching (LCB) and having a density below 915 kg/m³ (75% prestretch)

A first, second and third extrudible composition were prepared according to Preparatory Example 1 with the exception that the first extrudible composition comprised a LLDPE mixture of an LLDPE substantially free from long chain branching and with a density of 912 kg/m³ and a melt flow index (MI₂ measured at 190 °C with a 2.16 kg weight) of 1.0 g/10min at a content of 48% by weight and Dowlex 2045S with a density of 918 kg/m³ at a content of 40.5% by weight based on the total weight of the first extrudible composition.

By means of coextrusion, a core layer was formed of the first extrudible composition and two exterior layers sandwiching the core layer were formed of the second extrudible composition and the third extrudible composition, respectively. The coextruded film was blown and subsequently subjected to 75% prestretching. The core layer and the exterior layer together formed a prestretched polyethylene film of a total thickness of 19 µm. The two exterior layers each formed 10% by weight of the total film. The core layer formed 80% by weight of the total film. Several tests were performed to analyze the mechanical properties of the prestretched polyethylene film. The results of the tests are summarized in Table 1.

### Example - Comparison of Balewrap produced according to Preparatory Examples 1-6

Balewrap produced according to Preparatory Examples 1-6 was subjected to tensile testing in a tensile tester (LLOYD instruments, LR5K plus) in accordance with the ASTM D882 standard, wherein a strip of film with a width of 20 mm, clamped between two clamps at a distance of 50 mm from each other is stretched at a rate of 500 mm/min until the film breaks. The results are presented in Table 1. At five strips of the each film were measured, and the elongation capability (elongation at break, machine direction, MD) corresponds to the mean value of the measurements.

The stress required in order to stretch the prestretched film by 70% in the longitudinal direction was read from the tensile strength graph obtained when measuring the elongation percentage at break in accordance with the ASTM D882 standard as described above. The results are presented in Table 1. At least five strips of the film were measured, and the stress at 70% elongation corresponds to the mean value of the measurements.

**Table 1.**

| Ex. # | Co-mon. | MI₂ [g/10min] | Density [kg/m³] | Cat. | LCB | Pre-Stretch [%] | MD Stress at 70% [MPa] | MD Elong. at break [%] |
|---|---|---|---|---|---|---|---|---|
| 1 | Octene | 1.0 | 918 | ZN | No | 59% | 17.5 | 367 |
| 2 | Octene | 1.0 | 918 | ZN | No | 75% | 19.5 | 298 |
| 3 | Octene | 1.0 | 916 | Met. | Yes | 75% | 21.5 | 289 |
| 4 | Octene | 1.0 | 915 | Met. | Yes | 75% | 22.5 | 263 |
| 5 | Octene | 2.3 | 918 | ZN | No | 75% | 19.8 | 331 |
| 6 | Octene | 1.0 | 912 | ZN | No | 75% | 17.7 | 340 |

Examples 1-2 represent prior art balewrap films. Examples 3-5 represent previous attempts by the inventors to produce improved balewrap films, resulting in films having less suitable properties. Only Example 6 resulted in a more prestretched (75%) film having suitable tensile properties for balewrapping.

Furthermore, more than 1200 bales were produced on various types of bale wrapping machines under various wrapping conditions using the balewrap produced according to Preparatory Example 6. No problems with tearing of the film were observed. Baling operators executing the bale wrapping tests reported that the balewrap produced according to Preparatory Example 6 was less prone to tearing or breakage even compared to the prior art film of Example 1.

In conclusion, the inventive prestretched polyethylene film produced according to Preparatory Example 6 exhibited mechanical properties that are highly desirable for use as a balewrap or silage film.

## Claims

1. A prestretched polyethylene film having a longitudinal degree of pre-stretching above 70% and a remaining longitudinal elongation capability of at least 300% as determined according to ASTM D882, wherein said film is a coextruded blown film comprising at least one core layer arranged between two exterior layers, wherein the thickness of the film is in the range of 10-30 µm, and wherein the film comprises at least 25% by weight of a linear low density polyethylene (LLDPE) substantially free from long chain branching (LCB) produced using a Ziegler Natta catalyst and hexene, heptene or octene as comonomer and having a density of between 910 and 915 kg/m³.

2. A prestretched polyethylene film according to claim 1, wherein the film comprises at least 35%, preferably in the range of 35-95%, by weight of said linear low density polyethylene (LLDPE) substantially free from long chain branching (LCB).

3. A prestretched polyethylene film according to any one of the preceding claims, wherein the linear low density polyethylene (LLDPE) substantially free from long chain branching (LCB) has a density of between 911 and 913 kg/m³, preferably a density of about 912 kg/m³.

4. A prestretched polyethylene film according to any one of the preceding claims, wherein the linear low density polyethylene (LLDPE) substantially free from long chain branching (LCB) has a melt flow index in the range of 0.7-1.3 g/10min, preferably a melt flow index in the range of 0.9-1.1 g/10min, preferably a melt flow index of about 1 g/10min, as determined according to ASTM D1238 (190 °C, 2.16 kg weight).

5. A prestretched polyethylene film according to any one of the preceding claims, wherein the linear low density polyethylene (LLDPE) substantially free from long chain branching (LCB) is an LLDPE produced using a Ziegler Natta catalyst and octene as comonomer.

6. A prestretched polyethylene film according to any one of the preceding claims, said film having a longitudinal degree of prestretching between 70% and 100%, preferably between 70% and 85%, preferably between 71% and 79%, preferably between 73% and 77%, preferably about 75%.

7. A prestretched polyethylene film according to any one of the preceding claims, wherein the stress required in order to stretch the prestretched film by 70% in the longitudinal direction is less than 19 MPa, preferably less than 18 MPa, as determined according to ASTM D882.

8. A prestretched polyethylene film according to any one of the preceding claims, said film having a remaining longitudinal elongation capability of at least 320%, preferably at least 340%, as determined according to ASTM D882.

9. A prestretched polyethylene film according to any one of the preceding claims, wherein at least one layer comprises in the range of 40-99% by weight of said linear low density polyethylene (LLDPE) substantially free from long chain branching (LCB).

10. A prestretched polyethylene film according to any one of the preceding claims, wherein the at least one core layer comprises in the range of 40-99% by weight of the linear low density polyethylene (LLDPE) substantially free from long chain branching (LCB).

11. A prestretched polyethylene film according to any one of the preceding claims, wherein the thickness of the film is in the range of 13-25 µm, preferably in the range of 15-20 µm.

12. A prestretched polyethylene film according to any one of the preceding claims, which is an agricultural balewrap film or silage film.

13. Use of a prestretched polyethylene film according to any one of the preceding claims as an agricultural balewrap film or silage film.

14. Use of a prestretched polyethylene film according to any one of the preceding claims as a pallet wrapping film.

15. Use of a prestretched polyethylene film according to any one of the preceding claims as a waste wrap film.

## Patentansprüche

1. Vorgestreckte Polyethylenfolie mit einem Längsvorstreckungsgrad über 70 % und einem verbliebenen Längsdehnungsvermögen von mindestens 300 % gemäß ASTM D882, wobei es sich bei der Folie um eine coextrudierte Blasfolie mit mindestens einer Kernschicht, die zwischen zwei Außenschichten angeordnet ist, handelt, wobei die Dicke der Folie im Bereich von 10-30 µm liegt und wobei die Folie mindestens 25 Gew.-% eines unter Verwendung eines Ziegler-Natta-Katalysators und von Hexen, Hepten oder Octen als Comonomer hergestellten linearen Polyethylens niederer Dichte (LLDPE), das weitgehend frei von Langkettenverzweigung (Long Chain Branching, LCB) ist und eine Dichte zwischen 910 und 915 kg/m³ aufweist, umfasst.

2. Vorgestreckte Polyethylenfolie nach Anspruch 1, wobei die Folie mindestens 35 Gew.-%, vorzugsweise im Bereich von 35-95 Gew.-%, des linearen Polyethylens niederer Dichte (LLDPE), das weitgehend frei von Langkettenverzweigung (Long Chain Branching, LCB) ist, umfasst.

3. Vorgestreckte Polyethylenfolie nach einem der vorhergehenden Ansprüche, wobei das lineare Polyethylen niederer Dichte (LLDPE), das weitgehend frei von Langkettenverzweigung (Long Chain Branching, LCB) ist, eine Dichte zwischen 911 und 913 kg/m³, vorzugsweise eine Dichte von etwa 912 kg/m³, aufweist.

4. Vorgestreckte Polyethylenfolie nach einem der vorhergehenden Ansprüche, wobei das lineare Polyethylen niederer Dichte (LLDPE), das weitgehend frei von Langkettenverzweigung (Long Chain Branching, LCB) ist, einen Schmelzflussindex im Bereich von 0,7-1,3 g/10 min, vorzugsweise einen Schmelzflussindex im Bereich von 0,9-1,1 g/10 min, vorzugsweise einen Schmelzflussindex von etwa 1 g/10 min, gemäß ASTM D1238 (190 °C, 2,16 kg Gewicht) aufweist.

5. Vorgestreckte Polyethylenfolie nach einem der vorhergehenden Ansprüche, wobei es sich bei dem linearen Polyethylen niederer Dichte (LLDPE), das weitgehend frei von Langkettenverzweigung (Long Chain Branching, LCB) ist, um ein unter Verwendung eines Ziegler-Natta-Katalysators und von Octen als Comonomer hergestelltes LLDPE handelt.

6. Vorgestreckte Polyethylenfolie nach einem der vorhergehenden Ansprüche, wobei die Folie einen Längsvorstreckungsgrad zwischen 70 % und 100 %, vorzugsweise zwischen 70 % und 85 %, vorzugsweise zwischen 71 % und 79 %, vorzugsweise zwischen 73 % und 77 %, vorzugsweise von etwa 75 %, aufweist.

7. Vorgestreckte Polyethylenfolie nach einem der vorhergehenden Ansprüche, wobei die zum Strecken der vorgestreckten Folie um 70 % in der Längsrichtung erforderliche Spannung weniger als 19 MPa, vorzugsweise weniger als 18 MPa, gemäß ASTM D882, beträgt.

8. Vorgestreckte Polyethylenfolie nach einem der vorhergehenden Ansprüche, wobei die Folie ein verbliebenes Längsdehnungsvermögen von mindestens 320 %, vorzugsweise mindestens 340 %, gemäß ASTM D882, aufweist.

9. Vorgestreckte Polyethylenfolie nach einem der vorhergehenden Ansprüche, wobei mindestens eine Schicht im Bereich von 40-99 Gew.-% des linearen Polyethylens niederer Dichte (LLDPE), das weitgehend frei von Langkettenverzweigung (Long Chain Branching, LCB) ist, umfasst.

10. Vorgestreckte Polyethylenfolie nach einem der vorhergehenden Ansprüche, wobei die mindestens eine Kernschicht im Bereich von 40-99 Gew.-% des linearen Polyethylens niederer Dichte (LLDPE), das weitgehend frei von Langkettenverzweigung (Long Chain Branching, LCB) ist, umfasst.

11. Vorgestreckte Polyethylenfolie nach einem der vorhergehenden Ansprüche, wobei die Dicke der Folie im Bereich von 13-25 µm, vorzugsweise im Bereich von 15-20 µm, liegt.

12. Vorgestreckte Polyethylenfolie nach einem der vorhergehenden Ansprüche, bei der es sich um eine Ballenwickelfolie oder Silagefolie für die Landwirtschaft handelt.

13. Verwendung einer vorgestreckten Polyethylenfolie nach einem der vorhergehenden Ansprüche als Ballenwickelfolie oder Silagefolie für die Landwirtschaft.

14. Verwendung einer vorgestreckten Polyethylenfolie nach einem der vorhergehenden Ansprüche als Palettenwickelfolie.

15. Verwendung einer vorgestreckten Polyethylenfolie nach einem der vorhergehenden Ansprüche als Abfallwickelfolie.

## Revendications

1. Film de polyéthylène préétiré ayant un degré longitudinal de préétirage supérieur à 70 % et une capacité d'allongement longitudinal résiduelle d'au moins 300 % telle que déterminée selon l'ASTM D882, ledit film étant un film coextrudé soufflé comprenant au moins une couche centrale agencée entre deux couches extérieures, dans lequel l'épaisseur du film est dans la plage de 10 à 30 µm, et le film comprenant au moins 25 % en poids d'un polyéthylène linéaire basse densité (LLDPE) sensiblement exempt de ramification à chaîne longue (LCB) produit au moyen d'un catalyseur de Ziegler-Natta et d'hexène, d'heptène ou d'octène en tant que comonomère et ayant une masse volumique comprise entre 910 et 915 kg/m³.

2. Film de polyéthylène préétiré selon la revendication 1, le film comprenant au moins 35 %, de préférence dans la plage de 35 à 95 %, en poids dudit polyéthylène linéaire basse densité (LLDPE) sensiblement exempt de ramification à chaîne longue (LCB).

3. Film de polyéthylène préétiré selon l'une quelconque des revendications précédentes, dans lequel le polyéthylène linéaire basse densité (LLDPE) sensiblement exempt de ramification à chaîne longue (LCB) a une masse volumique comprise entre 911 et 913 kg/m³, de préférence une masse volumique d'environ 912 kg/m³.

4. Film de polyéthylène préétiré selon l'une quelconque des revendications précédentes, dans lequel le polyéthylène linéaire basse densité (LLDPE) sensiblement exempt de ramification à chaîne longue (LCB) présente un indice de fluidité dans la plage de 0,7 à 1,3 g/10 min, de préférence un indice de fluidité dans la plage de 0,9 à 1,1 g/10 min, de préférence un indice de fluidité d'environ 1 g/10 min, tel que déterminé selon l'ASTM D1238 (190 °C, 2,16 kg de poids).

5. Film de polyéthylène préétiré selon l'une quelconque des revendications précédentes, dans lequel le polyéthylène linéaire basse densité (LLDPE) sensiblement exempt de ramification à chaîne longue (LCB) est un LLDPE produit au moyen d'un catalyseur de Ziegler Natta et d'octène en tant que comonomère.

6. Film de polyéthylène préétiré selon l'une quelconque des revendications précédentes, ledit film ayant un degré longitudinal de préétirage compris entre 70 % et 100 %, de préférence entre 70 % et 85 %, de préférence entre 71 % et 79 %, de préférence entre 73 % et 77 %, de préférence d'environ 75 %.

7. Film de polyéthylène préétiré selon l'une quelconque des revendications précédentes, dans lequel la contrainte nécessaire pour étirer le film préétiré de 70 % dans la direction longitudinale est inférieure à 19 MPa, de préférence inférieure à 18 MPa, telle que déterminée selon l'ASTM D882.

8. Film de polyéthylène préétiré selon l'une quelconque des revendications précédentes, ledit film ayant une capacité d'allongement longitudinal résiduelle d'au moins 320 %, de préférence au moins 340 %, telle que déterminée selon l'ASTM D882.

9. Film de polyéthylène préétiré selon l'une quelconque des revendications précédentes, dans lequel au moins une couche comprend dans la plage de 40 à 99 % en poids dudit polyéthylène linéaire basse densité (LLDPE) sensiblement exempt de ramification à chaîne longue (LCB).

10. Film de polyéthylène préétiré selon l'une quelconque des revendications précédentes, dans lequel l'au moins une couche centrale comprend dans la plage de 40 à 99 % en poids du polyéthylène linéaire basse densité (LLDPE) sensiblement exempt de ramification à chaîne longue (LCB).

11. Film de polyéthylène préétiré selon l'une quelconque des revendications précédentes, l'épaisseur du film étant dans la plage de 13 à 25 µm, de préférence dans la plage de 15 à 20 µm.

12. Film de polyéthylène préétiré selon l'une quelconque des revendications précédentes, qui est un film d'enrubannage agricole ou un film d'ensilage.

13. Utilisation d'un film de polyéthylène préétiré selon l'une quelconque des revendications précédentes en tant que film d'enrubannage agricole ou film d'ensilage.

14. Utilisation d'un film de polyéthylène préétiré selon l'une quelconque des revendications précédentes en tant que film d'emballage pour palettes.

15. Utilisation d'un film de polyéthylène préétiré selon l'une quelconque des revendications précédentes en tant que film d'emballage pour déchets.
